# EUROPEAN PATENT APPLICATION

(11) **EP 0 642 741 A1**
(43) Date of publication of application: **15.03.1995**
(21) Application number: 94114069.1
(22) Date of filing: 08.09.1994
(51) Int. Cl.: A23K 1/18

(54) **Fish-feed for aquarium fish and respective production process**

(30) Priority: 14.09.1993 IT UD930182
(71) Applicant: NESTLE' ITALIANA S.p.A., I-20143 Milano (IT)
(72) Inventor: d'Odorico, Giorgio, I-20143 Milano (IT)
(74) Representative: D'Agostini, Giovanni, Dr.

(57) **Abstract**

Fish-feed for aquarium fish, characterized by the fact that it has a physical chemistry formulation, such to absorb water in a controlled manner, and specific initial weight lower than the water of the aquarium, with the aim that:
· when thrown onto water, it floats for a certain period; and
· then impregnating itself with water in a controlled way, it becomes heavier assuming a specific gravity slightly greater than the water of the aquarium, slowly depositing itself on the bottom, and
· furthermore characterized by the fact that it includes a substance which is heavier than water having the characteristic to disolve in water or reacting with it, determines a lightening of the specific weight of said feed, such to allow it to rise to the surface.
Advantageously the rise to the surface is obtained with the addition to the fish-feed substantially made up of a product impregnable of water, of a substance, such to:
· be heavier than water;
· immersed in water dissolves slowly in it.

## Description

This invention as a subject has a fish-feed for aquarium fish and respective production process.

At the present stage of technology aquarium fish feed, particularly (even if not exclusively) for domestic use, is well known in the form of flakes, approximately 90%, and the fish-feed in granule pellets 4%, or extruded 1%.

This fish-feed has the drawback of having a specific weight substantially heavier than the water of the aquarium after being drenched with water, therefore when it is not consumed it deposits itself at the bottom of the aquarium and rots, contributing to the degradation of the water pollution.

This fact furthermore leads to the saturation (clogging) of water recirculation filters in the aquarium, with consequent poor functioning, risk of damaging the circulation pump because of overcharging, reduction of the water circulation with a worsening of aquatic life, necessity of greater frequency in the replacement of the filter and in conclusion greater maintenance, the more frequent emptying of the aquarium for a rational cleaning also being necessary, with all the problems that follow.

To obviate the drawbacks described above floating fish-feed is also thought of, but it is known that in such case the permanent floating favours the oxidation and consequent rapid degradation of the feed, already full of water, because of the continuous contact with the air.

Therefore the problem to solve is double, and the following would be necessary:
- a fish-feed heavier than the water for the fish that prefer to feed on the bottom, and
- a fish-feed lighter than the water that floats for fish that prefer to feed on the surface.

The present invention, according to characteristics of the included claims, instead fully solves the problem in a simply unpredictable way, by means of a fish-feed for aquarium fish having an apparent specific weight comprised between 350 and 450 gr/l and a physical chemistry formulation, such to absorb water in a controlled manner, with the aim that:
· when thrown onto water, for said specific weight floats for a certain period of time, allowing a food supply to the fish that feed on the surface,
· then impregnating itself with water in a controlled manner, it becomes heavier assuming a specific weight slightly greater than 1000 gr/l depositing itself slowly on the bottom in order to allow a food supply to the fish that feed on the bottom, finally,
· rises to the surface again.

Advantageously the rise to the surface is obtained with the addition to the feed substantially made up of a product impregnable of water, of a substance, such to:
· be heavier than the water;
· immersed in water dissolves slowly in it.
In such a way, the fish-feed:
- initially, before imbibition of the impregnable substance, floats,
- then impregnated, it slowly deposits on the bottom because of the presence of the mineral substance at a greater specific weight,
- finally, after a part of said mineral substance heavier than water dissolves, it returns afloat.
Advantageously:
· the impregnable substance is the flour of cereals and/or the flour having animal origin;
   - the substance heavier than the water and soluble in it in a controlled manner is a mineral like a concentrated calcium.

Advantageously the concentrated calcium is a calcium carbonate and in such a case besides dissolving in a controlled manner in the water, realizes a slight chemical reaction that lets off gas, which bubbles, trapped in the spongy form of the fish-feed, determine a further Archimedes effect to obtain the upward push.

In this way all the fish, both those that habitually and mainly feed on the surface and those that habitually and mainly feed on the bottom, can be fed from a single fish-feed, and additionally, the fish-feed which is not consumed on the bottom, returning afloat, may be collected and eliminated, avoiding the pollution complained of.

The problem to make the fish-feed ascend after a certain period of time from the bottom, is advantageously solved with the following formulation of dry mixture, subsequent cooking and desiccation:
- flour from cereals in weight proportion comprised between 40% and 70%, preferably 57%;
- animal origin flour in a weight proportion comprised substantially between 10% and 30%, preferably 20%;
- protein concentrates comprised substantially between 8% and 20%, preferably 13%;
- animal and/or vegetable fat comprised substantially between 3% and 10%, preferably 6%;
- calcium concentrate comprised substantially between 2% and 7%, preferably 4%;
- possible various additives.

This formulation fully performs the mechanism required according to the invention to return afloat from the bottom after a certain period of time.

The production procedure of the fish-feed is the following:
· cooking extrusion at a maximum temperature of 135°, considering a maximum water process contribution of 30% and fats for a maximum of 10%;
· desiccation at 125° for 10/15 minutes
· immediate cooling.

The resulting product is of a spongy expansive form and therefore can impregnate itself with water to become slightly heavier and descend slowly onto the bottom after having floated for a certain period of time.

The form of the feed will be conveniently that of small aquatic animals, as for example prawns.

Advantageously as said the feed has a form of long curved elements similar to small prawns with length less than a centimetre and section of 0,5-3 mm.

## Claims

1. Fish-feed for aquarium fish, characterized in that it has a physical chemistry formulation, such to absorb water in a controlled manner, and an initial specific weight lower than the water of the aquarium, with the aim that:
· when thrown onto water, floats for a certain period of time, and
· then impregnating itself with water in a controlled manner, it assumes a specific weight slightly greater than the water of the aquarium, slowly depositing itself onto the bottom, and
· furthermore characterized by the fact that it includes a substance heavier than the water, having the characteristic of being able to dissolve in or reacting with water, determining a reduction of the specific weight of said feed, such to allow it to rise again to the surface.
Advantageously the return to the surface is obtained with the addition to the feed substantially made up of a product impregnable of water, of a substance, such to:
· be heavier than the water;
· immersed in water dissolves slowly in it.

2. Feed according to claim 1, characterized in that it has a specific apparent weight of 350-450 g/l.

3. Feed according to claim 1, characterized in that said substance, heavier than water is a water soluble substance.

4. Feed according to claim 1, characterized in that said substance, heavier than water is a substance that slowly reacts with the water forming gas bubbles.

5. Feed according to claim 1, characterized in that said substance contains calcium.

6. Feed according to claim 1, characterized in that said substance contains a calcium concentrate.

7. Feed according to claim 1, characterized in that said substance contains a calcium carbonate.

8. Feed according to claim 1, characterized in that said impregnable substance is a cereal flour and/or animal origin flour.

9. Feed according to claim 1, characterized in that it has the following formulation:
- flour from cereals in weight proportion comprised between 40% and 70%, preferably 57%;
- animal origin flour in weight proportion comprised substantially between 10% and 30%, preferably 20%;
- protein concentrates comprised substantially between 8% and 20%, preferably 13%;
- animal and/or vegetable fat comprised substantially between 3% and 10%, preferably 6%;
- calcium concentrate comprised substantially between 2% and 7%, preferably 4%;
- possible various additives and integrated vitamins.

10. Feed according to the preceding claims, characterized in that it has a expansive spongy form.

11. Feed according to the preceding claims, characterized in that it has a form of curved long elements similar to small prawns.

12. Feed according to the preceding claims, characterized in that it has a form of long curved elements similar to small prawns with length less than a centimetre and section of 0,5-3 mm.

13. Production procedure of a feed according to the characteristics of the preceding claims, characterized in that it has the following phases:
· cooking extrusion at maximum temperature of 135°, considering a maximum water process contribution of 30% and fats for a maximum of 10%;
· desiccation at 125° for 10/15 minutes
· immediate cooling.
